# FASCICULE DE BREVET EUROPEEN

(11) **EP 2 011 273 B1**
(45) Date de publication et mention de la délivrance du brevet: **28.10.2015**
(21) Numéro de dépôt: 07731887.1
(22) Date de dépôt: 06.04.2007
(51) Int. Cl.: H04L 12/28

(54) **PROCEDE ET DISPOSITIF D'ADAPTATION D'UN PROTOCOLE DE COMMUNICATION POINT A POINT DANS UN RESEAU DE TELECOMMUNICATIONS**
VERFAHREN UND ANORDNUNG ZUM ANPASSEN EINES PUNKT-ZU-PUNKT-PROTOKOLLS IN EINEM TELEKOMMUNIKATIONSNETZ
METHOD AND DEVICE FOR ADAPTING A POINT TO POINT PROTOCOL IN A TELECOMMUNICATIONS NETWORK

(30) Priorité: 14.04.2006 FR 0603422
(43) Date de publication de la demande: 07.01.2009
(73) Titulaire: Orange, 75015 Paris (FR)
(72) Inventeur: MAROTTA-LEVELEUX, Caroline, F-93220 Gagny (FR); DAMY, Stéphane, F-92380 Garches (FR); EL KHOURY, Ramzi, F-75007 Paris (FR)
(86) Numéro de dépôt international: PCT/FR2007/051085
(87) Numéro de publication internationale: WO 2007/119017

(56) Documents cités:
- US-A1- 2004 071 133
- US-A1- 2005 021 760
- MAMAKOS K LIDL J EVARTS UUNET TECHNOLOGIES L ET AL: "A Method for Transmitting PPP Over Ethernet (PPPoE)" IETF STANDARD, INTERNET ENGINEERING TASK FORCE, IETF, CH, février 1999 (1999-02), XP015008299 ISSN: 0000-0003 cité dans la demande

## Description

### Arrière-plan de l'invention

L'invention se situe dans le domaine technique des réseaux de télécommunication de type Internet.

Plus précisément, l'invention concerne un procédé et un dispositif de communication compatibles avec le protocole PPP (Point to Point Protocol) tel que défini par le document RFC 1661 (Request for Comments) de l'IETF (Internet Engineering TaskForce) Network Working Group.

On rappelle que les protocoles de connexion PPP peuvent être utilisés entre une passerelle résidentielle et un serveur d'accès large bande ou BAS (pour Broadband Access Server).

Le document RFC 1661 "The Point-to-Point Protocol (PPP) - IETF Network working group - Editor : W. Simpson - Date July 1994" décrit les trois phases suivantes :
- la phase LCP (Link Control Protocol) pour l'établissement, la configuration et le test de la connexion d'une liaison de données entre la passerelle résidentielle et le BAS ;
- la phase d'authentification de l'utilisateur par les protocoles PAP (Password Authentication Protocol) non sécurisé ou CHAP (Challenge Handshake Authentication Protocol) avec sécurisation des échanges ; et
- la phase IPCP (Internet Protocol Control Protocol) pour l'établissement de la configuration au niveau IP (affectation de l'adresse IP et des adresses DNS (Domain Name Server)).

Le document RFC 1661 précité spécifie que la valeur par défaut de la temporisation de retransmission d'un message LPC, IPCP, PAP ou CHAP est de 3 secondes et qu'elle doit être augmentée progressivement jusqu'à sa valeur finale maximale selon une progression géométrique de facteur 2 (doublement pour chaque nouvelle valeur).

Ainsi, à titre d'exemple, lorsque la passerelle résidentielle a émis une requête LCP ou IPCP Configuration Request, elle doit ré-émettre une requête identique si elle n'a pas reçu de réponse à cette requête, cette réponse pouvant être constituée par un accusé de réception positif (LCP/IPCP Configuration ACK), un accusé de réception négatif (LCP/IPCP Configuration NAK) ou un rejet (LCP/IPCP Configuration REJECT).

Après un certain nombre de tentatives sans succès (par exemple cinq), la passerelle résidentielle doit ré-établir une session avec le serveur BAS.

Pour cela, elle met en oeuvre le protocole défini dans le document RFC 2516 ("A method for transmitting PPP over Ethernet (PPPoE) IEEE network working group - Editors : L. Mamakos, K. Lidl, J. Evarts, D. Carrel, D. Simone, R. Wheeler - Date : February 1999").

Ce protocole précise notamment que si la passerelle résidentielle ne reçoit pas de paquet de réponse PADO (PPPoE Discovery Offer) à la requête de connexion PADI (PPPoE Discovery Initiation), elle doit renvoyer le paquet PADI et doubler la période d'attente entre deux émissions de paquets de connexion successives.

Ainsi lorsque la durée nominale pour calculer ce délai est de 2 secondes, la passerelle résidentielle émet, tant qu'elle ne reçoit pas de réponse PADO, une requête de connexion PADI aux instants 2 secondes, 4 secondes, 8 secondes, 16 secondes, 32 secondes, 64 secondes,...

Ce protocole n'est pas du tout adapté en cas de surcharge du réseau ou de dysfonctionnement du BAS.

En effet, dans ces conditions, les passerelles résidentielles surchargent fortement le réseau et le serveur BAS, par l'envoi à intervalles très rapprochés (2 secondes, 4 secondes, 8 secondes, 16 secondes,...) des requêtes de connexion PADI.

### Objet et résumé de Invention

Nous allons maintenant présenter l'invention dans le contexte du protocole PPP.

Bien entendu l'invention s'applique à d'autres protocoles point à point permettant la communication entre un équipement terminal et l'équipement central d'un opérateur de télécommunication.

Selon un premier aspect, l'invention propose un procédé de communication pouvant être mis en oeuvre par une extrémité de connexion côté client pour communiquer avec une extrémité de connexion côté opérateur dans un réseau de télécommunication. Ce procédé comporte :
- une étape d'établissement d'une session avec l'extrémité de connexion côté opérateur, au cours de laquelle l'extrémité de connexion côté client est susceptible d'émettre une pluralité de requêtes de connexion, jusqu'à réception d'un paquet d'acquittement, étape dans laquelle le délai séparant l'émission de deux requêtes de connexion successives est obtenu par une suite géométrique de raison strictement supérieure à 1, et dont le premier terme est constitué par un premier délai.

Ce procédé comporte les étapes suivantes, en cas de non réponse de la part de l'extrémité de connexion côté opérateur à un message de protocole envoyé par l'extrémité de connexion côté client :
- une étape d'établissement d'une nouvelle session avec l'extrémité de connexion côté opérateur, au cours de laquelle l'extrémité de connexion côté client est susceptible d'émettre une pluralité de requêtes de connexion, jusqu'à réception d'un paquet d'acquittement, dans laquelle le délai séparant l'émission de deux requêtes de connexion successives est constant et au moins égal à une valeur prédéterminée supérieure au premier délai.

Au sens de l'invention, l'extrémité de connexion côté client peut être constituée par exemple par une passerelle résidentielle ou par un PC équipé d'un modem et d'un kit de connexion PPPoE. L'extrémité de connexion côté opérateur peut être constituée par un BAS.

Ainsi, conformément à l'invention, lorsque l'extrémité de connexion côté client détecte une absence de réponse de la part de l'extrémité de connexion côté opérateur à un message de protocole envoyé par l'extrémité de connexion côté client, par exemple un dysfonctionnement du BAS ou une surcharge du réseau ou de ce serveur, il tente d'établir une nouvelle session avec l'extrémité connexion côté opérateur en émettant des requêtes de connexion successives mais espacées d'un délai supérieur au premier délai.

En outre, la valeur prédéterminée est fixée à une valeur maximale que peut atteindre le délai séparant l'émission de deux requêtes de connexion successives lors de l'étape d'établissement de la session.

Ainsi, l'extrémité côté opérateur n'est pas surchargée par des requêtes de connexion successives très rapprochées.

Dans un mode préféré de réalisation de l'invention, cette tentative de connexion avec un délai inter-requêtes de connexion allongé est mise en oeuvre dès que l'extrémité de connexion côté client détecte que plusieurs requêtes successives identiques n'ont pas été acquittées par l'extrémité de connexion côté opérateur.

En particulier, ce procédé de tentative d'établissement de session avec un délai inter-requête de connexion PADI allongé est mis en oeuvre lorsque plusieurs requêtes successives LCP Configuration Request, PAP Authentication Request, CHAP Response, IPCP Configuration Request ou LCP Echo Request ne sont pas acquittées.

Par ailleurs, une fois la session établie, l'extrémité côté client sauvegarde les paramètres de la session et suite à la détection de l'absence de réponse de la part de l'extrémité de connexion côté opérateur à un message de protocole envoyé par l'extrémité de connexion côté client et avant l'établissement de la nouvelle session, prend soin d'envoyer une requête pour fermer la session précédente. Cette caractéristique permet avantageusement de fermer la session antérieure et d'éviter la cohabitation de deux contextes associés à la même passerelle résidentielle dans le serveur BAS qui devient de plus en plus chargé.

Selon un deuxième aspect, l'invention concerne un procédé de communication pouvant être mis en oeuvre par une extrémité de connexion côté client pour communiquer avec une extrémité de connexion côté opérateur dans un réseau de télécommunication, ce procédé comportant une étape d'établissement de session avec l'extrémité de connexion côté opérateur au cours de laquelle l'extrémité de connexion côté client est susceptible d'émettre une pluralité de requêtes de connexion jusqu'à réception d'un paquet d'acquittement dans laquelle le délai séparant l'émission de deux requêtes de connexion successives est obtenu par une suite géométrique de raison strictement supérieure à 1 et dont le premier terme est constitué par un premier délai fixé aléatoirement entre 2 et 5 secondes.

L'utilisation de ce délai aléatoire permet, en cas de panne ou surcharge du réseau, d'éviter un comportement de reconnexion massive synchrone des passerelles résidentielles.

Contrairement au premier aspect de l'invention qui est mis en oeuvre en cas de non réponse de la part de l'extrémité de connexion côté opérateur à un message de protocole envoyé par l'extrémité de connexion côté client, ce deuxième aspect vise, préventivement, à éviter la surcharge du réseau.

Comme mentionné ci-dessus, ce délai aléatoire est utilisé pour calculer le délai effectif entre deux retransmissions successives de la requête de connexion.

Ce mécanisme s'applique notamment suite à une déconnexion, après la synchronisation de la ligne ADSL (Asynchronous Digital Subscriber Line) alors que la session PPP est fermée, et lors d'une connexion manuelle d'un utilisateur.

Dans un mode particulier de réalisation de l'invention, le délai compté entre la mise sous tension de l'extrémité de connexion côté client et l'envoi de la première requête de connexion est fixé aléatoirement entre 2 et 5 secondes.

Ce mécanisme permet d'éviter un comportement de reconnexion massive synchrone lorsqu'un nombre important de passerelles résidentielles sont mises sous tension simultanément, par exemple consécutivement à une coupure de courant généralisée.

Selon un troisième aspect, l'invention concerne un procédé de communication pouvant être mis en oeuvre par une extrémité de connexion côté client pour communiquer avec une extrémité de connexion côté opérateur dans un réseau de télécommunication, ce procédé comportant, en cas de détection d'une perte de synchronisation :
- une étape de sauvegarde des paramètres de la session ;
- une étape de détection de la reprise de la synchronisation ;
- une étape de mesure de la durée de ladite perte de synchronisation ; et en fonction de ladite durée :
   - une étape de maintien de ladite session ; ou
   - une étape d'établissement d'une nouvelle session ; ou
   - une étape d'établissement d'une nouvelle session précédée par une étape d'envoi d'une requête comportant les paramètres de ladite session, pour fermer ladite session.

Ce mécanisme permet avantageusement de fermer proprement la session en cas de perte de synchronisation.

Ainsi, lorsque la passerelle résidentielle détecte une désynchronisation de la ligne ADSL, elle récupère, après plusieurs envois de requêtes LCP Echo Request non acquittées, les paramètres de la session PPP, à savoir l'adresse MAC du serveur BAS et le numéro de cette session.

Elle attend ensuite la reprise de la synchronisation. Dès que la ligne se resynchronise, la passerelle envoie un paquet PADT en appliquant les valeurs définies par les paramètres de session préalablement sauvegardés et relance immédiatement la connexion PPP en envoyant après un délai aléatoire une requête PADI.

Si la durée de désynchronisation ADSL dépasse une durée prédéterminée, par exemple 30 minutes, il n'est plus nécessaire d'envoyer le paquet PADT.

L'invention concerne également un dispositif de communication susceptible de constituer une extrémité de connexion côté client apte à communiquer avec une extrémité de connexion côté opérateur dans un réseau de télécommunication, ce dispositif comportant :
- des moyens pour établir une session avec l'extrémité de connexion côté opérateur, agencés pour émettre une pluralité de requêtes de connexion, jusqu'à réception d'un paquet d'acquittement, et à respecter un délai séparant l'émission de deux requêtes de connexion successives, ce délai étant obtenu par une suite géométrique de raison strictement supérieure à 1, et dont le premier terme est constitué par un premier délai.

Ce dispositif comporte :
- des moyens de détection d'une absence de réponse de la part de l'extrémité de connexion côté opérateur à un message de protocole envoyé par l'extrémité de connexion côté client ;
- des moyens pour établir une nouvelle session avec l'extrémité de connexion côté opérateur, agencés pour émettre une pluralité de requêtes de connexion, jusqu'à réception d'un paquet d'acquittement, et à respecter un délai séparant l'émission de deux requêtes de connexion successives, ce délai étant constant et au moins égal à une valeur prédéterminée supérieure au premier délai.

L'invention concerne également un dispositif de communication susceptible de constituer une extrémité de connexion côté client apte à communiquer avec une extrémité de connexion côté opérateur dans un réseau de télécommunication, ce dispositif comportant des moyens pour établir une session avec l'extrémité de connexion côté opérateur, agencés pour émettre une pluralité de requêtes de connexion jusqu'à réception d'un paquet d'acquittement, et à respecter un délai séparant l'émission de deux requêtes de connexion successives, ce délai étant obtenu par une suite géométrique de raison strictement supérieure à 1 et dont le premier terme est constitué par un premier délai fixé aléatoirement entre 2 et 5 secondes.

L'invention concerne également un dispositif de communication susceptible de constituer une extrémité de connexion côté client apte à communiquer avec une extrémité de connexion côté opérateur dans un réseau de télécommunication.

Ce dispositif comporte :
- des moyens pour détecter une perte de synchronisation ;
- des moyens de sauvegarde des paramètres de la session ;
- des moyens pour détecter une reprise de synchronisation ; et
- des moyens de mesure de la durée de ladite perte de synchronisation ; et,
- des moyens pour relancer la connexion, agencés pour, en fonction de ladite durée :
   - maintenir ladite session ; ou
   - établir une nouvelle session ; ou
   - établir une nouvelle session après avoir envoyé une requête comportant les paramètres de ladite session, pour fermer ladite session.

Dans un mode particulier de réalisation, les différentes étapes des procédés de communication mentionnés ci-dessus sont déterminées par des instructions de programmes d'ordinateurs.

En conséquence, l'invention vise aussi un programme d'ordinateur sur un support d'informations, ce programme étant susceptible d'être mis en oeuvre dans un dispositif de communication ou plus généralement dans un ordinateur, ce programme comportant des instructions adaptées à la mise en oeuvre des étapes d'au moins un procédé de communication tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un dispositif de communication conforme à l'invention dans un mode préféré de réalisation ; et
- les figures 2A, 2B et 3 représentent, sous forme d'organigramme, les principales étapes d'un procédé de communication conforme à l'invention dans un mode particulier de réalisation.

### Description détaillée d'un mode de réalisation

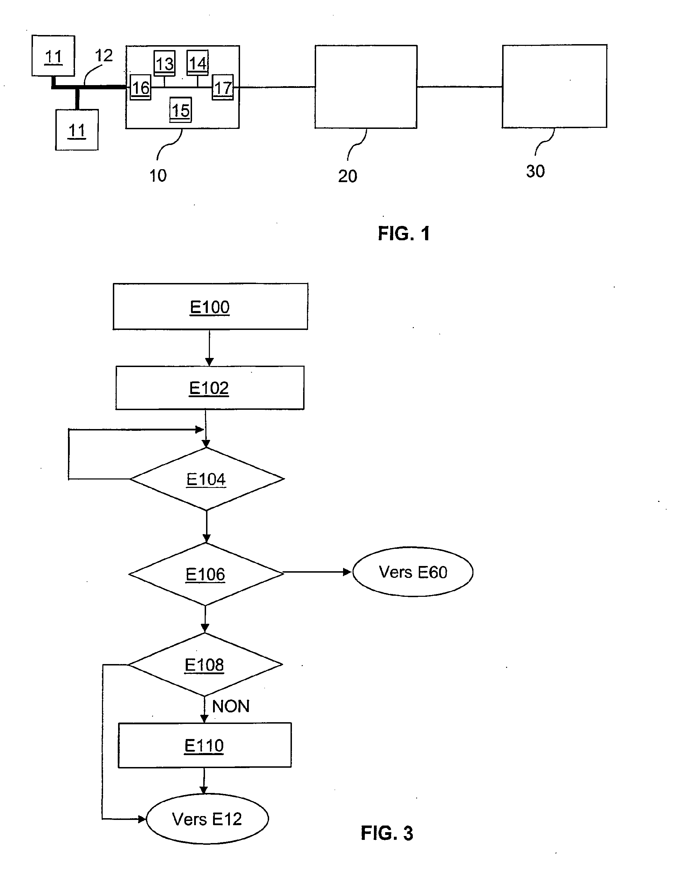

Sur la **figure 1**, on a référencé 10 un dispositif de communication conforme à l'invention.

Ce dispositif 10 est une passerelle résidentielle. Elle constitue une extrémité de connexion PPP côté client adaptée à communiquer avec une extrémité de connexion PPP côté opérateur 30.

Dans l'exemple décrit ici, cette extrémité de connexion PPP côté opérateur 30 est un BAS.

Dans l'exemple décrit ici, la passerelle résidentielle 10 est reliée, via un réseau Ethemet 12, à deux clients 11.

De façon connue, la passerelle résidentielle 10 communique avec le serveur BAS 30 par l'intermédiaire d'un dispositif DSLAM 20.

De façon connue, le DSLAM 20 est un équipement adapté à récupérer le flux de données transitant sur les lignes téléphoniques auxquelles il est raccordé, et à multiplexer ces données pour les rediriger vers le réseau de l'opérateur.

Dans le mode de réalisation décrit ici, la passerelle résidentielle 10 est constituée par un ordinateur. Elle comporte notamment un processeur 13, une mémoire morte de type ROM 14, une mémoire vive de type RAM 15, une carte Ethemet 16 pour communiquer avec les clients 11 et un modem ADSL 17 adapté à mettre en oeuvre les protocoles PPP et PPPoE.

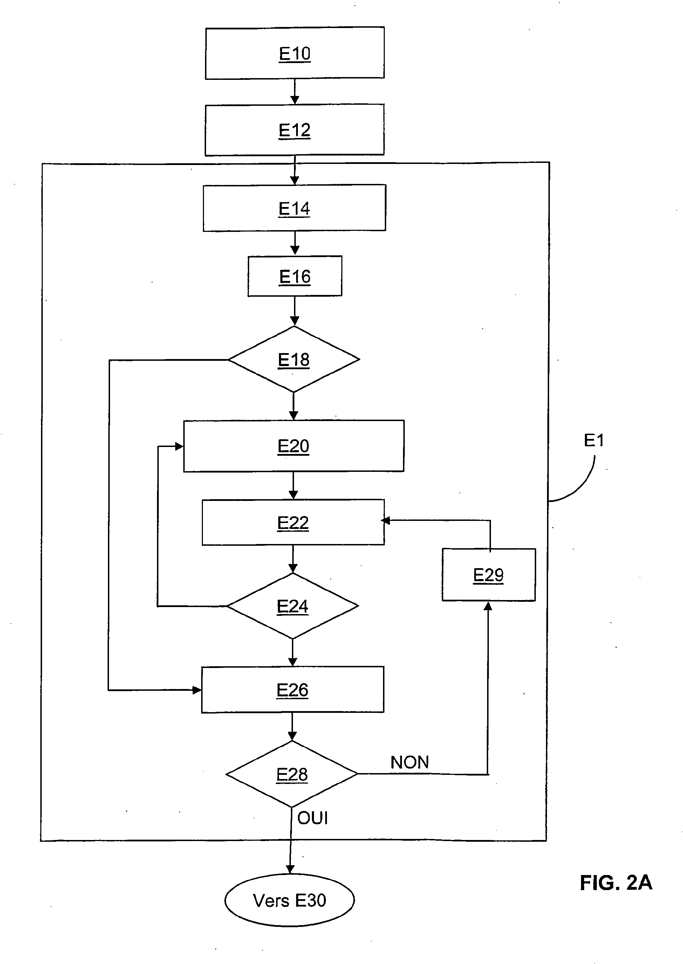

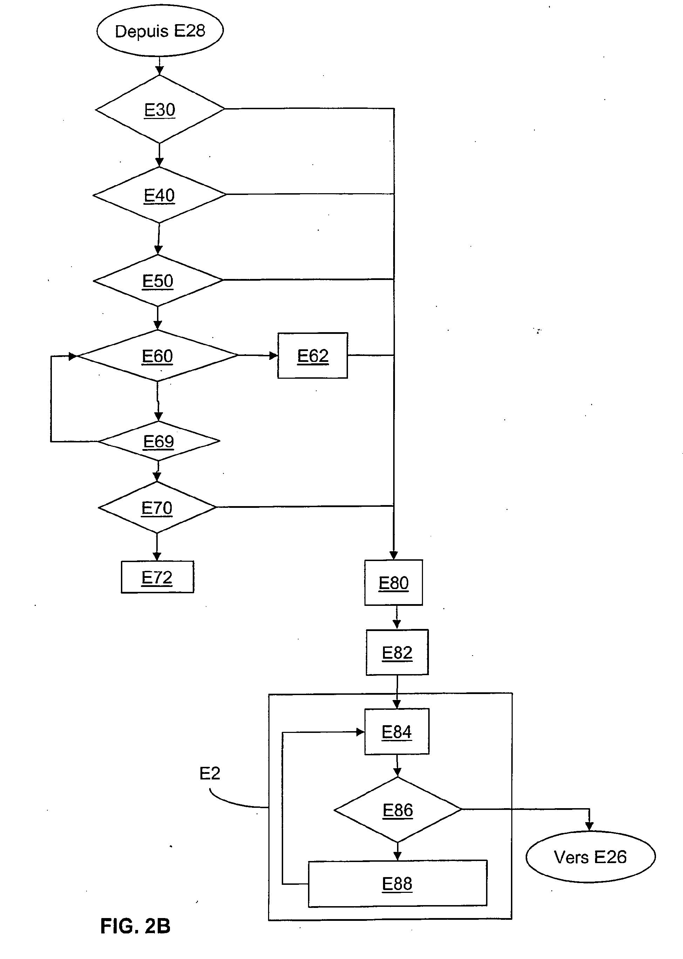

La mémoire morte 14 comporte un programme d'ordinateur adapté à mettre en oeuvre le procédé de communication conforme à l'invention dont les principales étapes sont données aux figures 2A, 2B et 3.

Nous supposerons, en référence à la figure 2A, que la passerelle résidentielle 10 est mise sous tension au cours d'une première étape E10.

Dans le mode de réalisation décrit ici, cette étape E10 de mise sous tension est suivie par une étape E12 au cours de laquelle la passerelle résidentielle 10 attend une durée fixée aléatoirement entre 2 et 5 secondes.

Cette étape E12 d'attente de durée aléatoire est suivie par une première étape E1 d'établissement d'une session entre la passerelle résidentielle 10 et le serveur BAS 30 qui va maintenant être décrite en détail.

Au cours d'une étape E14, la passerelle résidentielle 10 envoie une première requête de connexion PADI à destination du serveur BAS 30.

Cette étape est alors suivie par une étape E16 au cours de laquelle :
- on fixe aléatoirement la valeur d'un premier délai D1 entre 2 et 5 secondes ;
- on fixe un deuxième délai D2, par exemple à 256 secondes ; et
- on initialise un troisième délai D3 à une valeur par défaut, cette valeur pouvant être nulle.

Cette étape E16 est suivie par un test E18 au cours duquel la passerelle résidentielle 10 vérifie si elle a reçu un paquet d'acquittement PADO en réponse à la requête de connexion PADI au bout du premier délai D1.

Si la passerelle résidentielle 10 ne reçoit pas de réponse à la requête PADI, le résultat du test E18 est négatif.

Cette étape E18 est suivie par une étape E20 au cours de laquelle on détermine une durée D augmentée progressivement à partir de D1 jusqu'à une valeur finale maximale selon, dans le mode de réalisation, une progression géométrique de facteur 2 (doublement pour chaque nouvelle valeur).

Dans l'exemple de réalisation décrit ici, la valeur maximale est fixée à 256 secondes.

Cela signifie, qu'aux passages successifs dans cette étape E20, le délai D prend les valeurs 2 secondes, 4 secondes, 8 secondes, 16 secondes, 32 secondes, 64 secondes, 128 secondes, puis reste égal à la valeur maximale de 256 secondes, c'est-à-dire D2.

L'étape E20 de détermination de ce délai variable est suivie par une étape E22 au cours de laquelle la passerelle résidentielle 10 envoie une requête de connexion PADI au serveur BAS 30.

Cette étape est suivie par un test E24 au cours duquel la passerelle résidentielle 10 vérifie si elle a reçu un paquet PADO en réponse à l'envoi de la requête de connexion PADI au bout du délai D.

Si tel n'est pas le cas, le résultat du test E24 est négatif et on retourne dans l'étape E20 de détermination du délai variable déjà décrite.

Au contraire, si la passerelle résidentielle reçoit un paquet PADO, le résultat du test E24 est positif.

Ce test est alors suivi par une étape E26 au cours de laquelle la passerelle résidentielle 10 envoie la requête PADR à destination du serveur BAS 30.

Cette étape d'envoi est suivie par un test E28 au cours duquel la passerelle résidentielle 10 vérifie si elle a reçu un paquet PADS (PPPoE Active Discovery Session confirmation) en réponse à l'envoi de la requête PADR au bout du délai D.

Si tel est le cas, la première étape E1 d'établissement d'une session se termine et la passerelle résidentielle mémorise, au cours de cette étape E28, les paramètres de la session (adresse MAC du BAS, numéro de la session PPP).

Si tel n'est pas le cas, le résultat du test E28 est négatif. Ce test est alors suivi, après une étape E29 d'attente du délai D2 (ici 256 secondes) par l'étape E22 d'envoi d'une requête PADI au serveur BAS 30 déjà décrite.

Si la passerelle résidentielle 10 reçoit, au cours de l'étape E18, un paquet d'acquittement PADO à la première requête de connexion PADI envoyée à l'étape E14, dans le premier délai D1, le résultat de ce test E18 est positif. Ce test est alors suivi par l'étape E26 déjà décrite au cours de laquelle la passerelle résidentielle 10 envoie une requête PADR (PPPoE Active Discovery Request) à destination du serveur BAS 30.

L'envoi de ce paquet PADR est suivi par le test E28 déjà décrit au cours duquel la passerelle résidentielle 10 vérifie si elle a reçu un paquet PADS (PPPoE Active Discovery Session confirmation) en réponse à l'envoi du paquet PADR.

Si tel est le cas, la première étape E1 d'établissement de session se termine et la passerelle résidentielle mémorise, au cours de cette étape E28, les paramètres de la session (adresse MAC du BAS, numéro de la session PPP).

La première étape E1 d'établissement d'une session avec le serveur BAS 30 est suivie par l'envoi d'un paquet LCP Configuration Request conformément au protocole PPP.

Nous allons maintenant décrire la **figure 2B**.

Au cours d'un test E30, la passerelle 10 vérifie si elle a reçu un paquet LCP Configuration Ack, LCP Configuration Nack ou LCP Configuration Reject au bout d'un délai prédéterminé, par exemple 5 secondes, après avoir envoyé un paquet LCP Configuration Request à destination du serveur BAS 30.

Si tel n'est pas le cas, elle renvoie le paquet LCP Configuration Request, par exemple maximum 4 fois, soit 5 tentatives au total.

Si la passerelle résidentielle 10 n'a toujours pas reçu de réponse à la dernière tentative d'envoi d'une requête LCP Configuration Request, le résultat du test E30 est positif.

Ce test est alors suivi par une procédure de gestion d'erreur qui sera décrite ultérieurement.

Au contraire, si la passerelle résidentielle 10 reçoit une réponse à une requête LCP Configuration Request, le résultat du test E30 est négatif.

Ce test est alors suivi par une étape E40 au cours de laquelle la passerelle résidentielle 10 envoie, pour authentification de l'utilisateur de la passerelle 10, un paquet PAP (Password Authentication Protocol) Authenticate Request au serveur BAS 30.

Si la passerelle résidentielle 10 ne reçoit pas de réponse à ce paquet PAP Authenticate Request, elle ré-émet ce même paquet vers le serveur BAS 30.

Si, après trois tentatives sans succès, la passerelle résidentielle 10 n'a toujours pas reçu de réponse au paquet PAP Authenticate Request, le résultat du test E40 est positif et la passerelle résidentielle 10 met en oeuvre la procédure de gestion d'erreur qui sera décrite ultérieurement.

En revanche, si la passerelle résidentielle 10 reçoit une réponse à l'envoi d'une requête PAP Authenticate Request, le résultat du test E40 est négatif.

Ce test est alors suivi par l'envoi d'un paquet IPCP Configuration Request pour la mise en oeuvre de la phase d'établissement de la configuration au niveau IP, phase au cours de laquelle le serveur BAS 30 fournit une adresse IP à la passerelle résidentielle 10 ainsi que des adresses de serveurs DNS.

Si un nombre prédéterminé de requêtes IPCP Configuration Request n'a pas été acquitté par le serveur BAS 30, le résultat d'un test E50 est positif et ce test est suivi par la procédure de gestion d'erreur qui sera décrite ultérieurement.

En revanche, si une requête IPCP Configuration Request est acquittée, le résultat de ce test E50 est négatif.

Ce test est alors suivi par une phase de maintien de la connexion au cours de laquelle la passerelle résidentielle 10 envoie au serveur BAS 30 un paquet LCP Echo Request.

Si un nombre prédéterminé de paquets LCP Echo Request n'a pas été acquitté par le serveur BAS 30, le résultat d'un test E60 est positif et ce test est suivi par une étape E62 au cours de laquelle une durée D3 aléatoire est définie (par exemple entre 0 et 2 minutes). Cette étape est alors suivie par la procédure de gestion d'erreur qui sera décrite ultérieurement.

Au contraire, si la passerelle résidentielle 10 reçoit une réponse à l'émission d'un paquet LCP Echo Request, le résultat de ce test E60 est négatif et la passerelle résidentielle 10 reste dans la phase de maintien de la connexion.

Ce test est alors suivi par un test E69 au cours duquel la passerelle résidentielle vérifie l'arrivée (demande de fin de connexion de la part du serveur BAS 30) ou l'envoi (demande de déconnexion de la passerelle résidentielle 10) d'un paquet LCP Terminate Request.

Si la passerelle résidentielle 10 ne détecte pas un paquet LCP Terminate Request, le résultat de ce test E69 est négatif. Ce test passe alors au test E60.

Si la passerelle résidentielle 10 détecte un paquet LCP Terminate Request, le résultat de ce test E69 est positif. Ce test est alors suivi par un test E70, au cours duquel la passerelle résidentielle 10 détermine si la phase de déconnexion est bien acquittée.

Si la passerelle résidentielle 10 ne reçoit pas de paquet LCP Terminate Ack après plusieurs envois du paquet LCP Terminate Request, le résultat du test E70 est positif et ce test est suivi par la procédure de gestion d'erreur.

Si la passerelle résidentielle 10 reçoit une réponse à l'émission du paquet LCP Terminate Request, le résultat du test E70 est négatif. Ce test est alors suivi par l'envoi d'un paquet PADT (étape E72).

En variante, lorsque la passerelle résidentielle 10 ne reçoit pas de paquet LCP Terminate Ack après plusieurs envois du paquet LCP Terminate Request, c'est-à-dire lorsque le résultat du test E70 est positif, on effectue l'étape E72 (envoi d'un paquet PADT).

Nous allons maintenant décrire la procédure de gestion d'erreur.

Cette procédure est mise en oeuvre dès lors que la passerelle résidentielle 10 détecte un problème réseau, c'est-à-dire lorsqu'une pluralité de requêtes successives identiques (LCP Configuration Request, PAP Authenticate Request, IPCP Configuration Request ou LCP Echo Request), n'a pas été acquittée par le serveur BAS 30.

Au cours de cette procédure de gestion d'erreur, la passerelle résidentielle 10 envoie une requête PADT au serveur BAS 30 pour fermer la session en cours.

Cette étape E80 d'envoi d'une requête PADT est suivie par une étape E82 au cours de laquelle la passerelle résidentielle 10 attend pendant un délai D3 qui est déterminé en fonction du problème réseau.

Cette étape E82 est suivie par une étape E2 d'établissement d'une nouvelle session avec le serveur BAS 30.

Au cours de cette étape E2 d'établissement d'une nouvelle session, la passerelle résidentielle 10 envoie une requête de connexion PADI (étape E84).

Si un paquet PADO est reçu en réponse à l'envoi de cette requête de connexion PADI, le résultat d'un test E86 est positif. Ce test est alors suivi par l'étape E26 déjà décrite au cours de laquelle la passerelle résidentielle 10 envoie un paquet PADR au serveur BAS 30.

Au contraire, si la passerelle résidentielle 10 ne reçoit pas de paquet PADO avant l'expiration du délai D1, le résultat de ce test E86 est négatif.

Ce test est alors suivi par une étape E88 au cours de laquelle la passerelle résidentielle 10 attend une durée D au moins égale à une valeur prédéterminée D2 supérieure au premier délai D1 fixé aléatoirement au cours de l'étape E16 déjà décrite.

Dans l'exemple décrit ici, cette valeur D2 est égal à 256 secondes, alors que le premier délai D1 avait été fixé aléatoirement entre 2 et 5 secondes.

Cette valeur D2 peut être choisie égale à la valeur maximale que peut atteindre le délai D séparant l'émission de deux requêtes de connexion successives lors de l'étape E1 d'établissement d'une session.

L'étape E88 d'attente est suivie par l'étape E84 déjà décrite au cours de laquelle la passerelle résidentielle 10 envoie une requête de connexion PADI au serveur BAS 30.

Ainsi, le délai entre deux requêtes successives de connexion PADI est fortement allongé suite à la détection d'un problème sur le réseau.

Nous allons maintenant décrire en référence à la figure 3, un autre aspect du procédé de connexion selon l'invention décrit ici.

Dans ce mode particulier de réalisation, la passerelle résidentielle 10 est adaptée à détecter, au cours d'une étape E100, une perte de synchronisation sur la ligne ADSL qui la relie au dispositif DSLAM 20.

Sur détection d'une telle perte de synchronisation, la passerelle résidentielle 10 sauvegarde, au cours d'une étape E102, les paramètres de la session (adresse MAC du BAS et numéro de session PPP) obtenus du serveur BAS 30.

Cette étape E102 de sauvegarde est suivie par un test E104 au cours de laquelle la passerelle résidentielle 10 détecte la reprise de la synchronisation.

Tant que la ligne ne se resynchronise pas, la passerelle residentielle 10 reste au test E104.

Lorsque la synchronisation est rétablie, le résultat du test E104 est positif et ce test est suivi par une étape E106 au cours de laquelle la passerelle résidentielle 10 détermine l'état de la phase de maintien de la connexion LCP Echo.

Si la session PPP est toujours maintenue, ce test est alors suivi par l'étape E60 déjà décrite.

Si la phase de maintien de la connexion LCP Echo est acquittée, le résultat de ce test E106 est positif. Ce test est alors suivi par une étape E108 au cours de laquelle la passerelle résidentielle 10 vérifie si la synchronisation a été perdue pendant une durée au moins égale à une durée prédéterminée, par exemple 30 minutes.

Si tel n'est pas le cas, la passerelle résidentielle 10 envoie, au cours d'une étape E110, un paquet PADT au serveur BAS 30.

Après l'envoi de ce paquet PADT, ou juste après la reprise de synchronisation, si la désynchronisation a été d'une durée inférieure à la durée prédéterminée, la passerelle résidentielle 10 passe à l'étape E12.

Si la durée de la désynchronisation a été inférieure à la durée prédéterminée et que l'on a reçu une requête LCP Echo Request alors la passerelle résidentielle 10 continue la session. Si la désynchronisation est supérieure au temps prédéterminé et que l'on ne reçoit plus de LCP Echo Request alors l'envoi du PADT n'est plus nécessaire et on envoie une requête PADI, ce qui permet de relancer la connexion.

Dans l'exemple détaillé de réalisation décrit précédemment, la phase d'authentification de l'utilisateur a été effectuée conformément au protocole PAP non sécurisé (Password Authentication Protocol).

L'invention s'applique également dans le cas où on utilise un protocole avec sécurisation des échanges de type CHAP (Challenge Handshake Authentication Protocole).

Dans ce cas, l'authentification commence par l'envoi d'un paquet CHAP Challenge par le serveur BAS 30 en direction de la passerelle résidentielle 10.

Après avoir émis le premier paquet CHAP Response, le mécanisme de renvoi des paquets pendant la phase d'authentification CHAP est identique à celui décrit pour une authentification de type PAP, la passerelle résidentielle 10 attendant la réception d'un paquet CHAP Success ou CHAP Failure en provenance du serveur BAS 30.

Plus précisément, si la passerelle résidentielle 10 ne reçoit pas un tel paquet en réponse à l'émission d'un nombre prédéterminé de paquets CHAP Response, celle-ci met en oeuvre la procédure de gestion d'erreur constituée principalement, comme déjà décrit, par l'envoi d'un paquet PADT et l'envoi de paquets de connexion PADI successifs avec un délai inter-paquets PADI relativement long (délai D2).

On soulignera d'une manière générale que le procédé de l'invention consiste à, après établissement de la session, en cas de non réponse de la part de l'extrémité de connexion côté opérateur à un message de protocole (requêtes ou paquets LCP Configuration Request, PAP Authentication Request, CHAP Response, IPCP Configuration Request ou LCP Echo Request) envoyé par l'extrémité de connexion côté client, à exécuter une étape d'établissement d'une nouvelle session avec l'extrémité de connexion côté opérateur, au cours de laquelle l'extrémité de connexion côté client est susceptible d'émettre une pluralité de requêtes de connexion, jusqu'à réception d'un paquet d'acquittement, dans laquelle le délai séparant l'émission de deux requêtes de connexion successives est constant et au moins égal à une valeur prédéterminée supérieure audit premier délai.

## Revendications

1. Procédé de communication pouvant être mis en oeuvre par une extrémité de connexion côté client (10) pour communiquer avec une extrémité de connexion côté opérateur (30) dans un réseau de télécommunication, ce procédé comportant :
- une étape (E1) d'établissement d'une session avec ladite extrémité de connexion côté opérateur (30), au cours de laquelle ladite extrémité de connexion côté client (10) est susceptible d'émettre (E14, E22) une pluralité de requêtes de connexion, jusqu'à réception (E18, E24) d'un paquet d'acquittement, dans laquelle le délai (D) séparant l'émission de deux requêtes de connexion successives est obtenu (E20) par une suite géométrique de raison strictement supérieure à 1, et dont le premier terme est constitué par un premier délai (D1);
**caractérisé en ce qu'**il comprend en cas de non réponse de la part de l'extrémité de connexion côté opérateur à un message de protocole envoyé par l'extrémité de connexion côté client :
- une étape (E2) d'établissement d'une nouvelle session avec ladite extrémité de connexion côté opérateur (30), au cours de laquelle ladite extrémité de connexion côté client (10) est susceptible d'émettre (E84) une pluralité de requêtes de connexion, jusqu'à réception (E86) d'un paquet d'acquittement, dans laquelle le délai (D) séparant l'émission de deux requêtes de connexion successives est constant et au moins égal à une valeur prédéterminée (D2) supérieure audit premier délai (D1).

2. Procédé selon la revendication 1, dans lequel la valeur prédéterminée est égale à une valeur maximale que peut atteindre le délai (D) séparant l'émission de deux requêtes de connexion successives lors de l'étape d'établissement de la session.

3. Procédé selon la revendication 1 ou 2, dans lequel l'absence de réponse de la part de l'extrémité de connexion côté opérateur à un message de protocole envoyé par l'extrémité de connexion côté client consiste à détecter plusieurs requêtes successives identiques non acquittées par ladite extrémité de connexion côté opérateur (30).

4. Procédé selon l'une quelconque des revendications précédentes, comprenant en outre une étape (E28) de sauvegarde des paramètres de la session une fois la session établie et suite à la détection de l'absence de réponse de la part de l'extrémité de connexion côté opérateur à un message de protocole envoyé par l'extrémité de connexion côté client, une étape d'envoi (E80) d'une requête, comportant les paramètres sauvegardés de la session, pour fermer ladite session.

5. Procédé selon l'une quelconque des revendications précédentes, comprenant en outre, préalablement à ladite étape (E1) d'établissement de la session, une étape (E16) au cours de laquelle on fixe aléatoirement ledit premier délai (D1) entre 2 et 5 secondes.

6. Procédé selon l'une quelconque des revendications précédentes, dans lequel, le délai compté entre la mise sous tension (E10) de ladite extrémité de connexion côté client (10) et l'envoi (E14) de la première dite requête de connexion est fixé aléatoirement entre 2 et 5 secondes.

7. Procédé selon l'une quelconque des revendications précédentes, comprenant, en cas de détection (E100) d'une perte de synchronisation :
- une étape (E102) de sauvegarde des paramètres de ladite session ;
- une étape (E104) de détection d'une reprise de synchronisation ;
- une étape de mesure de la durée de ladite perte de synchronisation ; et en fonction de ladite durée :
- une étape (E60) de maintien de ladite session ;
- une étape (E1) d'établissement d'une nouvelle session ; ou
- une étape (E1) d'établissement d'une nouvelle session précédée par une étape (E110) d'envoi d'une requête comportant les paramètres de ladite session, pour fermer ladite session.

8. Dispositif de communication (10) susceptible de constituer une extrémité de connexion côté client apte à communiquer avec une extrémité de connexion côté opérateur (30) dans un réseau de télécommunication, ce dispositif comportant :
- des moyens pour établir une session (E1) avec ladite extrémité de connexion côté opérateur (30), agencés pour émettre (E14, E22) une pluralité de requêtes de connexion, jusqu'à réception (E18, E22) d'un paquet d'acquittement, et à respecter un délai (D) séparant l'émission de deux requêtes de connexion successives, ce délai (D) étant obtenu (E20) par une suite géométrique de raison strictement supérieure à 1, et dont le premier terme est constitué par un premier délai (D1) ;
ledit dispositif (20) étant **caractérisé en ce qu'**il comporte :
- des moyens de détection d'une absence de réponse de la part de l'extrémité de connexion côté opérateur à un message de protocole envoyé par l'extrémité de connexion côté client ; et,
- des moyens pour établir une nouvelle session (E2) avec ladite extrémité de connexion côté. opérateur (30), agencés pour émettre (E84) une pluralité de requêtes de connexion, jusqu'à réception (E86) d'un paquet d'acquittement, et à respecter un délai (D) séparant l'émission de deux requêtes de connexion successives, ce délai (D) étant constant et au moins égal à une valeur prédéterminée (D2) supérieure audit premier délai (D1).

9. Programme d'ordinateur comportant des instructions pour l'exécution des étapes du procédé de communication selon l'une quelconque des revendications 1 à 7 lorsque ledit programme est exécuté par un ordinateur.

10. Support d'enregistrement lisible par un ordinateur sur lequel est enregistré un programme d'ordinateur comprenant des instructions pour l'exécution des étapes du procédé de communication selon l'une quelconque des revendications 1 à 7.

## Patentansprüche

1. Kommunikationsverfahren, das durch ein clientseitiges Anschlussende (10) eingesetzt wird, um mit einem bedienerseitigen Anschlussende (30) in einem Telekommunikationsnetz zu kommunizieren, wobei dieses Verfahren umfasst:
- einen Schritt (E1) der Einrichtung einer Sitzung mit dem bedienerseitigen Anschlussende (30), während dessen das clientseitige Anschlussende (10) geeignet ist, eine Vielzahl von Anschlussanträgen zu entsenden (E14, E22), bis zum Empfang (E18, E24) eines Quittierungspakets, wobei die Frist (D) zwischen dem Entsenden von zwei aufeinanderfolgenden Anschlussanträgen durch eine geometrische Folge im Verhältnis unbedingt größer als 1 erhalten wird (E20), deren erster Terminus von einer ersten Frist (D1) gebildet ist;
**dadurch gekennzeichnet, dass** es im Falle eines Nichtantwortens von Seiten des bedienerseitigen Anschlussendes auf eine vom clientseitigen Anschlussende gesandte Protokollnachricht umfasst:
- einen Schritt (E2) der Einrichtung einer neuen Sitzung mit dem bedienerseitigen Anschlussende (30), während dessen das clientseitige Anschlussende (10) geeignet ist, eine Vielzahl von Anschlussanträgen zu entsenden (E84), bis zum Empfang (E86) eines Quittierungspakets, wobei die Frist (D) zwischen dem Entsenden von zwei aufeinanderfolgenden Anschlussanträgen konstant und mindestens gleich einem vorbestimmten Wert (D2) größer als die erste Frist (D1) ist.

2. Verfahren nach Anspruch 1, bei dem der vorbestimmte Wert gleich einem Maximalwert ist, den die Frist (D) zwischen dem Entsenden von zwei aufeinanderfolgenden Anschlussanträgen während des Schrittes der Einrichtung der Sitzung erreichen kann.

3. Verfahren nach Anspruch 1 oder 2, bei dem das Nichtantworten von Seiten des bedienerseitigen Anschlussendes auf eine vom clientseitigen Anschlussende gesandte Protokollnachrichtung darin besteht, mehrere identische aufeinanderfolgende Anträge zu erfassen, die von dem bedienerseitigen Anschlussende (30) nicht quittiert wurden.

4. Verfahren nach einem der vorhergehenden Ansprüche, ferner umfassend einen Schritt (E28) der Sicherung der Parameter der Sitzung, wenn die Sitzung eingerichtet ist, und nach dem Erfassen eines Nichtantwortens von Seiten des bedienerseitigen Anschlussendes auf eine vom clientseitigen Anschlussende gesandte Protokollnachricht einen Schritt des Sendens (E80) eines Antrags, umfassend die gesicherten Parameter der Sitzung, um die Sitzung zu schließen.

5. Verfahren nach einem der vorhergehenden Ansprüche, ferner umfassend vor dem Schritt (E1) der Einrichtung der Sitzung einen Schritt (E16), während dessen die erste Frist (D1) zwischen 2 und 5 Sekunden zufällig festgelegt wird.

6. Verfahren nach einem der vorhergehenden Ansprüche, bei dem die zwischen der Unterspannungsetzung (E10) des clientseitigen Anschlussendes (10) und dem Entsenden (E14) des ersten Anschlussantrags gezählte Frist zwischen 2 und 5 Sekunden zufällig festgelegt wird.

7. Verfahren nach einem der vorhergehenden Ansprüche, umfassend im Fall einer Erfassung (E100) eines Synchronisationsverlustes:
- einen Schritt (E102) der Sicherung der Parameter der Sitzung;
- einen Schritt (E104) der Erfassung einer Wiederaufnahme der Synchronisation;
- einen Schritt des Messens der Dauer des Synchronisationsverlustes, und, in Abhängigkeit von der Dauer:
- einen Schritt (E60) der Aufrechterhaltung der Sitzung;
- einen Schritt (E1) der Einrichtung einer neuen Sitzung; oder
- einen Schritt (E1) der Einrichtung einer neuen Sitzung, vor dem ein Schritt (E110) des Entsendens eines Antrags, umfassend die Sitzungsparameter, zum Schließen der Sitzung, erfolgt.

8. Kommunikationsvorrichtung (10), die geeignet ist, ein clientseitiges Anschlussende darzustellen, das geeignet ist, mit einem bedienerseitigen Anschlussende (30) in einem Telekommunikationsnetz zu kommunizieren, wobei diese Vorrichtung umfasst:
- Mittel zur Einrichtung einer Sitzung (E1) mit dem bedienerseitigen Anschlussende (30), die derart vorgesehen sind, dass sie eine Vielzahl von Anschlussanträgen entsenden (E14, E22), bis zum Empfang (E18, E22) eines Quittierungspakets, und eine Frist (D) einhalten, die zwischen dem Entsenden von zwei aufeinanderfolgenden Anschlussanträgen liegt, wobei diese Frist (D) durch eine geometrische Folge im Verhältnis unbedingt größer als 1 erhalten wird (E20), deren erster Terminus von einer ersten Frist (D1) gebildet ist;
wobei die Vorrichtung (20) **dadurch gekennzeichnet ist, dass** sie umfasst:
- Mittel zur Erfassung eines Nichtantwortens von Seiten des bedienerseitigen Anschlussendes auf eine vom clientseitigen Anschlussende gesandte Protokollnachricht; und
- Mittel zur Einrichtung einer neuen Sitzung (E2) mit dem bedienerseitigen Anschlussende (30), die derart vorgesehen sind, dass sie eine Vielzahl von Anschlussanträgen entsenden (E84), bis zum Empfang (E86) eines Quittierungspakets, und eine Frist (D) zwischen dem Entsenden von zwei aufeinanderfolgenden Anschlussanträgen einhalten, wobei die Frist (D) konstant und mindestens gleich einem vorbestimmten Wert (D2) größer als die erste Frist (D1) ist.

9. Computerprogramm, umfassend Befehle für die Ausführung der Schritte des Kommunikationsverfahrens nach einem der Ansprüche 1 bis 7, wenn das Programm von einem Computer ausgeführt wird.

10. Von einem Computer lesbarer Aufzeichnungsträger, auf dem ein Computerprogramm aufgezeichnet ist, umfassend Befehle für die Ausführung der Schritte des Kommunikationsverfahrens nach einem der Ansprüche 1 bis 7.

## Claims

1. Method of communication that can be implemented by a client-side connection end (10) so as to communicate with an operator-side connection end (30) in a telecommunication network, this method comprising:
- a step (E1) of establishing a session with the said operator-side connection end (30), in the course of which the said client-side connection end (10) may send (E14, E22) a plurality of connection requests, until receipt (E18, E24) of an acknowledgement packet, wherein the lag (D) separating the sending of two successive connection requests is obtained (E20) through a geometric series with common ratio strictly greater than 1, and whose first term consists of a first lag (D1);
**characterized in that** it comprises, in case of non-response on the part of the operator-side connection end to a protocol message dispatched by the client-side connection end:
- a step (E2) of establishing a new session with the said operator-side connection end (30), in the course of which the said client-side connection end (10) may send (E84) a plurality of connection requests, until receipt (E86) of an acknowledgement packet, wherein the lag (D) separating the sending of two successive connection requests is constant and at least equal to a predetermined value (D2) greater than the said first lag (D1).

2. Method according to Claim 1, in which the predetermined value is equal to a maximum value that can be attained by the lag (D) separating the sending of two successive connection requests during the step of establishing the session.

3. Method according to Claim 1 or 2, in which the absence of response on the part of the operator-side connection end to a protocol message dispatched by the client-side connection end consists in detecting several identical successive requests not acknowledged by the said operator-side connection end (30).

4. Method according to any one of the preceding claims, furthermore comprising a step (E28) of saving the parameters of the session once the session has been established and, subsequent to the detection of the absence of response on the part of the operator-side connection end to a protocol message dispatched by the client-side connection end, a step (E80) of dispatching a request, comprising the saved parameters of the session, so as to close the said session.

5. Method according to any one of the preceding claims, furthermore comprising, prior to the said step (E1) of establishing the session, a step (E16) in the course of which the said first lag (D1) is fixed randomly between 2 and 5 seconds.

6. Method according to any one of the preceding claims, in which the lag counted between the power-up (E10) of the said client-side connection end (10) and the dispatching (E14) of the first said connection request is fixed randomly between 2 and 5 seconds.

7. Method according to any one of the preceding claims, comprising, in case of detection (E100) of a loss of synchronization:
- a step (E102) of saving the parameters of the said session;
- a step (E104) of detecting a resumption of synchronization;
- a step of measuring the duration of the said loss of synchronization; and, as a function of the said duration:
- a step (E60) of maintaining the said session;
- a step (E1) of establishing a new session; or
- a step (E1) of establishing a new session preceded by a step (E110) of dispatching a request comprising the parameters of the said session, so as to close the said session.

8. Communication device (10) capable of constituting a client-side connection end able to communicate with an operator-side connection end (30) in a telecommunication network, this device comprising:
- means for establishing a session (E1) with the said operator-side connection end (30) and designed to send (E14, E22) a plurality of connection requests, until receipt (E18, E22) of an acknowledgement packet, and to comply with a lag (D) separating the sending of two successive connection requests, this lag (D) being obtained (E20) through a geometric series with common ratio strictly greater than 1, and whose first term consists of a first lag (D1);
the said device (20) being **characterized in that** it comprises:
- means for detecting an absence of response on the part of the operator-side connection end to a protocol message dispatched by the client-side connection end; and,
- means for establishing a new session (E2) with the said operator-side connection end (30) and designed to send (E84) a plurality of connection requests, until receipt (E86) of an acknowledgement packet, and to comply with a lag (D) separating the sending of two successive connection requests, this lag (D) being constant and at least equal to a predetermined value (D2) greater than the said first lag (D1).

9. Computer program comprising instructions for the execution of the steps of the method of communication according to any one of Claims 1 to 7 when the said program is executed by a computer.

10. Recording medium readable by a computer on which a computer program comprising instructions for the execution of the steps of the method of communication according to any one of Claims 1 to 7 is recorded.
